# FASCICULE DE BREVET EUROPEEN

(11) **EP 3 314 711 B1**
(45) Date de publication et mention de la délivrance du brevet: **24.07.2019**
(21) Numéro de dépôt: 16741354.1
(22) Date de dépôt: 22.06.2016
(51) Int. Cl.: F02N 11/08, F02N 11/10, H02K 1/14, H02K 11/25, H02H 7/08, H02H 7/085, H02K 5/14

(54) **DÉMARREUR DE VÉHICULE AUTOMOBILE MUNI D'UN SYSTÈME DE PROTECTION THERMIQUE**
KRAFTFAHRZEUGANLASSER MIT THERMISCHEM SCHUTZSYSTEM
MOTOR VEHICLE STARTER HAVING A THERMAL PROTECTION SYSTEM

(30) Priorité: 26.06.2015 FR 1555913
(43) Date de publication de la demande: 02.05.2018
(73) Titulaire: Valeo Equipements Electriques Moteur, 94046 Créteil Cedex (FR)
(72) Inventeur: PALTRIE, Thierry, 38070 Isle d'Abeau (FR); CHAMROUX, Jérémie, 38070 Isle d'Abeau (FR)
(74) Mandataire: Duprez, Richard
(86) Numéro de dépôt international: PCT/FR2016/051528
(87) Numéro de publication internationale: WO 2016/207547

(56) Documents cités:
- DE-A1- 19 911 070
- FR-A1- 2 373 905
- FR-A1- 2 717 961
- FR-A1- 2 949 626
- US-A1- 2005 051 126

## Description

La présente invention porte sur un démarreur de véhicule automobile muni d'un système de protection thermique. L'invention trouve une application particulièrement avantageuse, mais non exclusive, avec les démarreurs de systèmes d'arrêt et de redémarrage automatique du moteur thermique, dits système "stop and start" en anglais.

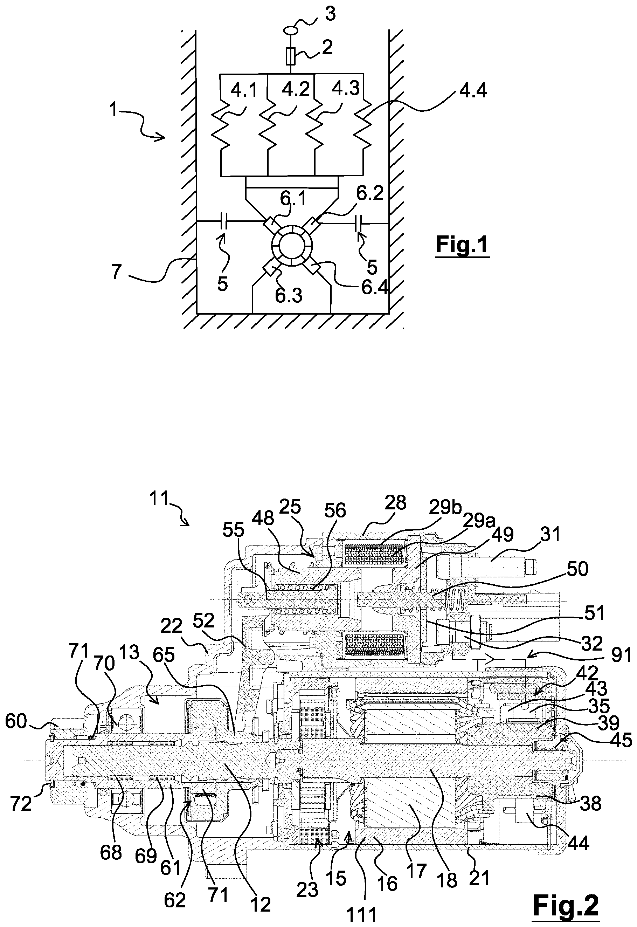

De façon connue en soi, les démarreurs, comprennent un moyen de protection contre les surintensités prenant la forme d'un ou plusieurs fusibles électriques et/ou d'un ou plusieurs disjoncteurs. La figure 1 montre ainsi un exemple de moteur 1 de démarreur comprenant un fusible 2 monté en série entre une borne d'alimentation 3 de la machine électrique 1 et des enroulements 4.1-4.4 du stator dudit moteur.

Le fusible est destiné à fondre pour couper l'alimentation électrique du moteur lorsqu'il est parcouru par un courant prédéterminé maximum. Cela permet d'éviter de détériorer le démarreur ou son environnement à cause de la chaleur produite par une surintensité. Une telle surintensité apparait notamment dans le cas où le rotor du moteur est bloqué en rotation.

Lorsque la machine fonctionne à vide ou à faible charge (c'est-à-dire qu'elle fonctionne environ entre 0 et 25% de la charge nominale), la vitesse de rotation à vide du rotor entraîne également un échauffement de la machine électrique susceptible d'endommager le démarreur sur la durée. Cet échauffement, dû notamment au frottement mécanique entre les balais 6.1-6.4 et le collecteur, se produit par exemple en phase de survitesse lorsque le pignon du démarreur entraîné par le moteur thermique tourne plus vite que l'arbre entraîné par le rotor du démarreur. Toutefois, dans ce cas, le courant traversant le fusible peut être trop faible pour engendrer une fusion du fusible 2 et cela même sur une longue durée.

Le document FR140573 déposé le 23 janvier par Valeo décrit un système 5 de protection thermique compact permettant de couper l'alimentation électrique du moteur dans les deux cas précités (en cas de blocage et en cas de fonctionnement à faible charge). Plus précisément, ce système est configuré pour qu'en cas de surchauffe, une partie surmoulée sur la platine du porte-balais se déforme, en sorte que les cages à balai de polarité positive soumises à l'action de ressorts entrent en contact avec la platine reliée à la borne de polarité négative. On crée ainsi un court-circuit générant une ouverture du fusible du démarreur.

US 2005/051126A1 peut être considéré comme l'art antérieur le plus proche. FR 2 717 961 A1, FR 2 373 905 A1 et FR 2 949 626 A1 peuvent être considérés comme des arts antérieurs pertinents.

L'invention vise à améliorer la protection thermique du démarreur en cas de faible niveau de charge de la batterie du véhicule susceptible de rendre difficile l'ouverture du fusible, et ce même en cas de court-circuit.

A cet effet, l'invention propose un démarreur pour moteur thermique de véhicule automobile comprenant :
- au moins un contacteur électromagnétique comprenant une borne de sortie positive,
   - au moins un moteur électrique, ledit moteur électrique comprenant:
      - un stator comprenant des bobines, chacune des bobines étant bobinée autour d'une pièce polaire pour former un pôle,
      - au moins une cage à balai,
      - au moins un balai positif monté dans ladite cage à balai,
      - un chemin électrique entre ledit balai positif et la borne de sortie positive, et
   - au moins une protection thermique située dans ledit chemin électrique, dans lequel ladite protection thermique est apte à déconnecter deux éléments lorsque la protection thermique a une température supérieure à un seuil de température pour déconnecter électriquement ladite borne de sortie positive par rapport audit balai positif et dans lequel au moins un autre des éléments dudit chemin électrique est un fusible apte à fondre au-delà d'un courant prédéterminé et en ce que ladite protection thermique et ledit fusible sont deux éléments distincts.

L'invention permet ainsi de couper le circuit d'alimentation du moteur électrique d'une manière qui dépend principalement du niveau de température dans le démarreur. On assure ainsi une coupure du circuit d'alimentation quel que soit le niveau de charge de la batterie du véhicule.

Selon une réalisation, ledit seuil de température correspond à une anomalie du démarreur provoquant un échauffement susceptible d'endommager le véhicule.

Selon une réalisation, ladite protection thermique est agencée dans ledit moteur électrique de telle façon qu'un facteur principal permettant d'atteindre le seuil de température en cas d'anomalie est une transmission par conduction thermique et/ou par convection d'une chaleur correspondant à une anomalie de fonctionnement vers ladite protection thermique.

Selon une réalisation, en cas de court-circuit, ledit fusible est apte à agir en fondant pour déconnecter électriquement ladite borne de sortie positive par rapport audit balai positif.

Selon une réalisation, ledit fusible est constitué par une tresse de balai positif.

Selon une réalisation, ledit fusible est situé dans le chemin électrique entre la protection thermique et un pont de connexion de bobines.

Selon une réalisation, ladite protection thermique comprend une soudure à faible température de fusion reliant entre eux un premier et un deuxième éléments dudit chemin électrique, ladite soudure étant apte à fondre au-delà dudit seuil de température, dans lequel, dans un état de fonctionnement du démarreur, la soudure est apte à être dans un état solide pour relier le premier élément au deuxième élément et en cas d'anomalie sur le démarreur, ladite soudure est apte à passer à l'état fondu pour permettre à ladite protection thermique de séparer lesdits deux éléments du chemin électrique.

Selon une réalisation, un des éléments dudit chemin électrique est un conducteur et un autre élément dudit chemin électrique est un connecteur reliant électriquement ledit conducteur à au moins une bobine, ces deux éléments étant reliés entre eux par ladite soudure.

Selon une réalisation, ladite protection électrique comprend un organe élastique apte à exercer une pression sur un des éléments dudit chemin électrique reliés entre eux par ladite soudure. On facilite ainsi la déconnexion des deux éléments en cas de surchauffe.

Selon une réalisation, ladite protection thermique comporte une butée apte à retenir un des deux éléments dudit chemin électrique suite à la fonte de la soudure. On contrôle ainsi le positionnement de l'élément libre en mouvement suite à la fonte de la soudure.

Selon une réalisation, ladite protection thermique comporte un dispositif de guidage du déplacement d'un des deux éléments dudit chemin électrique suite à la fonte de la soudure.

Selon une réalisation, ledit conducteur est constitué par un plot allongé traversant un passe-fil monté sur ladite carcasse.

Selon une réalisation, ledit organe élastique, ladite butée, et ledit dispositif de guidage viennent de matière avec ledit passe-fil.

Selon une réalisation, ledit connecteur présente une forme de crochet.

Selon une réalisation, ledit crochet comporte une portion d'anneau adaptée à entourer en partie le conducteur et une patte pour être relié électriquement auxdites bobines.

Selon une réalisation, ledit connecteur est relié aux bobines par le biais d'un pont de connexion, dit pont de bobine, soudé à au moins une bobine.

Selon une réalisation, ledit pont de bobine est monté électriquement entre ledit connecteur et lesdites bobines.

Selon une réalisation, des tresses de balais positifs sont soudées audit pont de bobines.

Selon une réalisation, un second pont de connexion est soudé à une sortie d'au moins une bobine et soudé à des tresses de balais positifs.

Selon une réalisation, un fusible est monté entre ledit connecteur et ledit pont de bobine.

Selon une réalisation, une couche isolante agencée pour isoler électriquement ladite cage à balai par rapport à une platine de support est déformable à partir d'un autre seuil de température, et un moyen élastique sollicitant ledit balai positif contre une lame de contact d'un collecteur est apte à établir un contact entre ladite cage à balai et ladite platine de support suite à une déformation de ladite couche isolante déformable.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, représente un schéma de principe d'un moteur électrique de démarreur de véhicule automobile muni d'un système de protection thermique;
La figure 2 est une vue en coupe longitudinale d'un démarreur de moteur thermique de véhicule automobile selon la présente invention;
La figure 3 représente une vue en perspective d'un porte-balais appartenant au démarreur de la figure 2;
La figure 4 est une vue en perspective détaillée d'un exemple de réalisation de la protection thermique mise en oeuvre dans le démarreur de véhicule automobile selon la présente invention;
Les figures 5a et 5b sont des schémas électriques illustrant des variantes de connexion des bobines du stator appartenant au moteur électrique du démarreur selon la présente invention;
La figure 6 est une représentation en perspective de la platine de support du porte-balais de la figure 3;
La figure 7 est un graphique montrant l'évolution, en fonction du temps, de la température du démarreur, de la tension d'alimentation du démarreur, et du courant circulant dans le collecteur lors de l'activation de la protection thermique.

Les éléments identiques, similaires, ou analogues conservent la même référence d'une figure à l'autre.

En référence à la figure 2, le démarreur 11 selon l'invention comporte notamment un arbre d'entraînement 12, un lanceur 13 monté sur l'arbre d'entraînement 12, et un moteur électrique 15 composé d'un stator inducteur 16 et d'un rotor induit 17 solidaire d'un arbre 18. Le moteur 15 comporte une carcasse 21 montée sur un support 22 du démarreur 11 destiné à être fixé sur une partie fixe du véhicule automobile.

Un réducteur de vitesse 23 à engrenages de type train épicycloïdal est de préférence intercalé entre une extrémité arrière de l'arbre d'entraînement 12 et l'arbre 18 du moteur électrique 15.

Le démarreur 11 comporte également un contacteur électromagnétique 25 s'étendant parallèlement au moteur électrique 15 en étant implanté radialement au-dessus de celui-ci. Le contacteur 25 présente une cuve métallique 28 équipée d'un jeu de bobines d'excitation 29a, 29b. Des bornes 31, 32 sont conformées pour former chacune un contact fixe à l'intérieur de la cuve 28. L'une des bornes 31 est destinée à être reliée à la borne positive de la batterie du véhicule. L'autre borne 32, dite borne de sorte positive, est connectée à l'entrée du bobinage inducteur du stator 16 et aux balais 35 de polarités positives, comme cela est expliqué plus en détails ci-après.

Ces balais 35 frottent sur des lames conductrices 38 d'un collecteur 39 pour alimenter le bobinage rotorique. Les balais 35 appartiennent à un porte-balais 42 équipé de cages 43 de guidage et de réception des balais 35. Ces balais 35 sont sollicités en direction des lames conductrices 38 par des moyens élastiques 44 de type ressort. Un palier 45 du flasque arrière sert au montage à rotation d'une extrémité de l'arbre 18 du moteur électrique 15.

De manière connue, lors de l'excitation de la bobine d'appel 29a, un noyau mobile 48 est attiré par attraction magnétique en direction d'un noyau fixe 49 du contacteur 25 pour, d'une part, agir après rattrapage d'un jeu sur une tige 50 portant un contact mobile 51 pour provoquer la fermeture des contacts 31, 32 du contacteur 25 et alimenter le moteur électrique 15, et d'autre part, actionner un levier de commande 52 agissant sur le lanceur 13. L'extrémité supérieure du levier 52 est montée de manière connue à articulation sur une tige mobile 55 reliée élastiquement au noyau mobile 48 via un ressort 56, dit ressort dent contre dent, logé dans le noyau mobile 48.

Le lanceur 13 peut ainsi passer d'une position de repos dans laquelle un pignon d'entraînement 60 est situé à distance de la couronne de démarrage du moteur thermique à une position active dans laquelle le pignon d'entraînement 60 coopère avec la couronne de démarrage du moteur thermique. L'arbre d'entraînement 12 transmet alors un couple issu du moteur électrique 15 au pignon d'entraînement 60 par le biais d'un corps de pignon 61, via un dispositif à roue libre 62. Suite à la désactivation du contacteur 25, le lanceur 13 repasse de sa position active à sa position de repos.

Lorsque le lanceur 13 est dans une position active, le corps de pignon 61 est entraîné, via le dispositif à roue libre 62, par un entraîneur 65. A cet effet, le corps de pignon 61 est monté sur l'arbre d'entraînement par l'intermédiaire de deux coussinets 68, 69 de forme annulaire.

Le corps de pignon 61 est monté rotatif dans un palier avant 70 du support 22. Ce palier 70 est constitué à titre d'exemple par un roulement à billes ou en variante par un roulement à aiguilles, ou un palier lisse.

Le dispositif à roue libre 62 est par exemple du type à galets, mais pourrait en variante être remplacé par un dispositif à embrayage conique ou un embrayage muni de plusieurs disques de friction, comme décrit dans le document FR2978500.

De manière connue, l'entraîneur 65 est doté intérieurement de cannelures hélicoïdales en prise de manière complémentaire avec des dentures hélicoïdales externes portées par l'arbre d'entraînement 12. Le lanceur 13 est ainsi animé d'un mouvement hélicoïdal lorsqu'il est déplacé par le levier 52 pour venir en position active, par l'intermédiaire du pignon 60, en prise avec la couronne de démarrage du moteur thermique.

Le pignon d'entraînement 60 étant lié en rotation et monté coulissant axialement par rapport au corps du pignon 61 par l'intermédiaire de jeux de rainures de forme complémentaire, un ressort 71 sollicite le pignon d'entraînement 60 en direction d'une butée axiale 72 formée par exemple par un circlip. Le ressort 71 sera compressé en sorte que le pignon 60 recule en cas de choc du pignon 60 avec la couronne de démarrage.

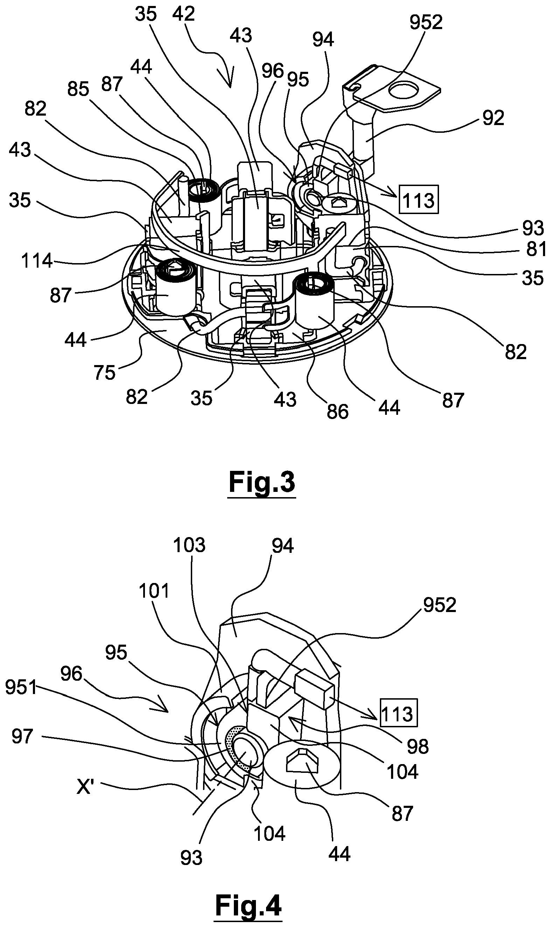

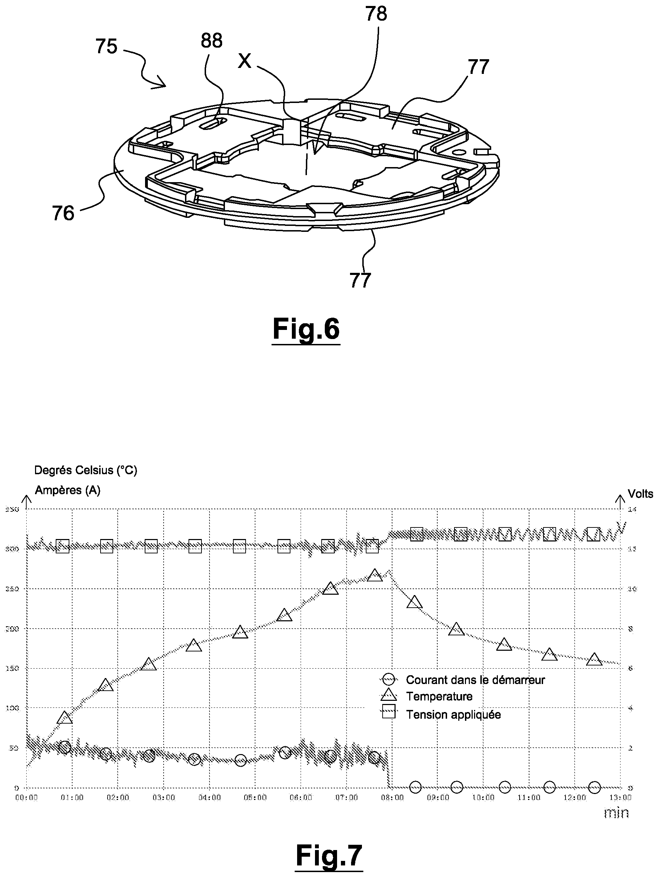

La figure 3 est une vue détaillée du porte-balais 42 d'axe X comportant une platine de support 75 de forme sensiblement annulaire sur laquelle est fixé l'ensemble de cages 43 servant chacune de logement à un balai 35. Comme cela est bien visible sur la figure 6, la platine de support 75 est une pièce monobloc comportant une plaque métallique 76 et des couches surmoulées 77 réalisées de part et d'autre de la plaque métallique 76. Les couches surmoulées 77 sont réalisées au moyen d'une matière plastique assurant une bonne isolation électrique. Les couches surmoulées 77 protègent au moins en partie la face support de balais ainsi que la face opposée. Les couches surmoulées 77 sont sensibles à la chaleur et déformables à partir d'un seuil de température T1. Le seuil de température T1 correspond à une température au-delà de laquelle le démarreur 11 et/ou son environnement seraient susceptibles d'être endommagés.

Différentes matières plastiques sont utilisables selon les applications et les contraintes qui s'imposent à celles-ci. Typiquement, la matière plastique utilisée pour les couches surmoulées 77 est une matière thermoplastique telle qu'un polyamide PA4.6 ou PA6.6 ou un polypropylène PPS chargé en fibres de verre entre 40 et 50%. Des matières thermodurcissables peuvent aussi être envisagées. La plaque métallique 76 est typiquement obtenue par emboutissage à partir d'un acier à découper tel que par exemple le FePO5.

La platine de support 75 et les cages 43 qu'elle porte viennent se fixer sur le flasque formant le palier arrière 45 pour l'arbre 18 du moteur électrique 15. En outre, la partie centrale de la platine 75 comporte une ouverture 78 par laquelle l'ensemble qu'elle forme avec les cages 43 et les balais 35 est monté autour de l'arbre 18 du moteur électrique 15.

Chaque balai 35 est monté à coulissement à l'intérieur d'une cage 43, laquelle est ouverte du côté de l'axe X pour permettre la mise en contact électrique des balais 35 avec les lames 38 du collecteur 39. Plus précisément, chaque cage 43 est réalisée par pliage d'une plaquette de tôle mince dont les branches d'extrémité sont fixées sur la platine 75. Une des parois latérales présente une échancrure 81, visible sur la figure 3, pour autoriser le passage du bras du ressort 44 correspondant. Du côté de la face débouchant du côté du collecteur 39, chaque cage 43 pourra comporter des volets 85 s'étendant de part et d'autre du balai 35 pour éviter que les poussières générées par les frottements des balais 35 avec les lames 38 viennent altérer le fonctionnement du porte-balais 42.

Chaque cage 43 comporte en outre un système de fixation à la platine 75. Chaque système de fixation est formé par exemple par des pattes 86 coopérant avec les ouvertures 88 ménagées dans la platine 75. Alternativement, les cages 43 sont fixées sur la platine 75 au moyen de rivets.

Par ailleurs, un ressort à spirales 44 associé à chaque cage 43 sollicite radialement le balai 35 correspondant vers les lames de contact 38 du collecteur 39. Chaque ressort 44 comporte une partie enroulée formée par une pluralité de spires, ainsi qu'un bras destiné à venir en appui contre la face arrière du balai 35 correspondant. Chaque ressort 44 est en l'occurrence monté autour d'un système de maintien 87 formé par un pion s'étendant axialement par rapport à l'axe X.

Les balais 35 de polarité positive sont reliés électriquement à la borne de sortie positive 32 du contacteur 25 via un chemin électrique 91. Ce chemin électrique 91 est ainsi formé par l'ensemble des éléments conduisant le courant entre la borne de sortie 32 et les balais 35 de polarité positive. Comme on peut le voir sur la figure 3, ce chemin électrique 91 est formé notamment par les éléments suivants:
- un premier conducteur 92 assurant une liaison électrique entre la borne de sortie positive 32 du contacteur 25 et un deuxième conducteur 93,
- ledit deuxième conducteur 93 étant constitué par un plot allongé rigide traversant un passe-fil 94 coopérant avec la carcasse 21 pour isoler hermétiquement le porte-balais 42 par rapport à l'environnement extérieur, et
- un connecteur 95
présentant une forme de crochet. Comme cela est mieux visible sur la figure 4, le connecteur 95 comporte une portion d'anneau 951 adaptée à entourer en partie le plot 93 et une patte 952 pour être relié électriquement à des bobines 111 appartenant au stator 16 du moteur électrique 15. Ces bobines 111 sont montées chacune autour d'une pièce polaire pour former un pôle.

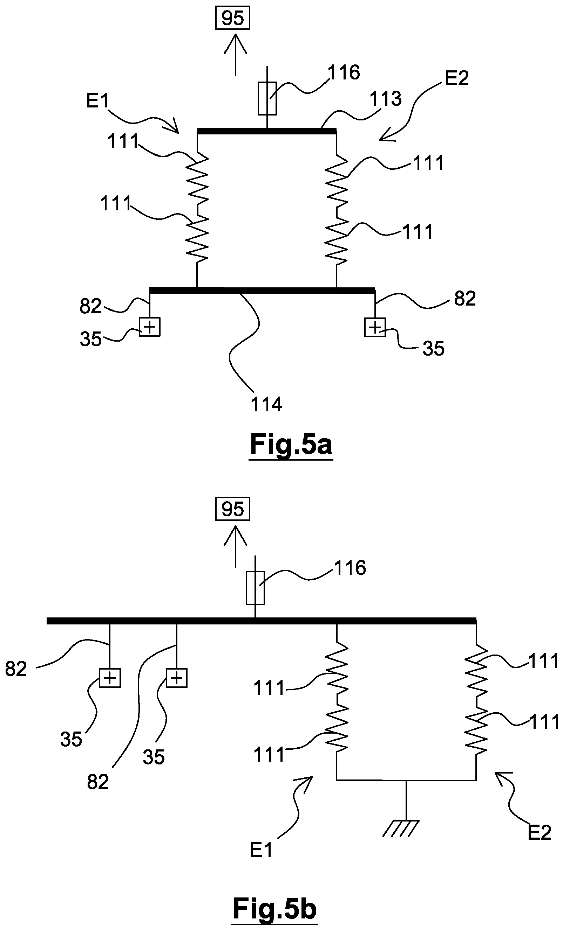

Ainsi, dans le mode de réalisation de la figure 5a, deux ensembles E1, E2 de bobines 111 sont montés en parallèle, chaque ensemble E1, E2 comportant deux bobines 111 montées électriquement en série. Les premières extrémités des deux ensembles E1, E2 sont soudées à un premier pont de connexion 113, dit pont de bobine, auquel est également reliée électriquement la patte 952. Les deuxièmes extrémités des deux ensembles E1, E2 sont soudées à un deuxième pont de connexion 114. Les tresses des balais positifs 35 sont également soudées au pont de connexion 114.

En variante, toutes les bobines 111 sont connectées en parallèles les unes par rapport aux autres entre les deux ponts 113, 114, comme dans le mode de réalisation de la figure 1.

Dans le mode de réalisation de la figure 5b, deux ensembles E1, E2 de bobines 111 sont montés en parallèle, chaque ensemble E1, E2 comportant deux bobines 111 montées électriquement en série. Les premières extrémités des deux ensembles E1, E2 ainsi que les tresses des balais positifs 35 sont soudées au pont de bobine 113 auquel est également reliée électriquement la patte 952. Les deuxièmes extrémités des deux ensembles E1, E2 de bobines sont connectées électriquement à la masse.

En outre, un des éléments situés dans le chemin électrique 91 est un fusible apte à fondre au-delà d'un courant prédéterminé, par exemple de l'ordre de 100 Ampères. Ainsi, en cas de court-circuit générant un tel courant, le fusible agit en fondant pour déconnecter électriquement la borne de sortie positive 32 par rapport au balai positif 35. En l'occurrence, on utilise un fusible électrique 116 monté entre le connecteur 95 et le pont de bobine 113 mis en oeuvre dans le mode de réalisation des figures 5a et 5b. Alternativement ou en complément, on utilise deux fusibles constitués chacun par une tresse 82 souple de balai positif 35 réalisée en cuivre ou en alliage de cuivre. En variante, il serait possible d'utiliser des fusibles dédiés insérés dans le chemin électrique 91.

Par ailleurs, une protection thermique 96 distincte du fusible est située dans le chemin électrique 91. En l'occurrence, comme cela est visible sur les figures 3 et 4, la protection thermique 96 comprend une soudure 97 à faible température de fusion reliant le connecteur 95 au plot 93, via la portion 951.

La soudure 97 est ainsi apte à fondre au-delà d'un seuil de température T2 correspondant à une anomalie du démarreur provoquant un échauffement susceptible d'endommager le véhicule. Ce seuil de température T2 est inférieur à 300°C et par exemple comprise entre 230°C et 260°C. La soudure 97 est de préférence formée par un alliage de cuivre et d'étain, le taux de cuivre étant inférieur à 10%. Le taux de cuivre est par exemple de l'ordre de 2%.

La protection thermique 96 est agencée dans le moteur électrique 15 de telle façon qu'un facteur principal permettant d'atteindre le seuil de température T2 en cas d'anomalie est une transmission par conduction thermique et/ou par convection d'une chaleur correspondant à l'anomalie de fonctionnement vers la protection thermique 96, et non un courant traversant la protection thermique 96. Cette chaleur pourra par exemple être générée notamment par des poussières dues à l'usure des balais 35, le dysfonctionnement d'une pièce mécanique, ou un dysfonctionnement électrique du démarreur.

La protection thermique 96 est en l'occurrence située à proximité du palier arrière à l'intérieur du volume intérieur délimité par la carcasse 21. En variante, le positionnement pourra être adapté en sorte que la protection thermique pourra être située à l'extérieur de la carcasse 21. Dans tous les cas, la protection thermique 96 est positionnée à proximité des éléments susceptibles de générer une chaleur importante en cas d'anomalie pour une transmission par convection et/ou par conduction vers la protection thermique 96.

En outre, il est à noter que la soudure de la protection thermique 96 n'a pas nécessairement la résistance électrique la plus élevée des éléments du chemin électrique 91. De préférence, la protection thermique 96 présente même une faible résistance électrique afin que le courant participe le moins possible à son échauffement.

En outre, dans certains cas, la température de fusion de la soudure 96 pourra être inférieure à toutes températures de fusion des différents éléments du chemin électrique 91.

En revanche, dans d'autres cas, la température de fusion de la soudure 96 est supérieure à la température de fusion du fusible constitué ici par une ou plusieurs tresses 82. Toutefois, du fait de l'agencement précédemment indiqué de la protection thermique 96, la protection thermique 96 pourra avoir une température plus élevée que le fusible en cas d'anomalie de fonctionnement, ce qui provoque la fusion de la protection thermique 96 avant celle du fusible.

De préférence, la protection thermique 96 comprend en outre un organe élastique 98 précontraint axialement entre le porte-balais 42 (ici la platine 75 du porte-balais 42) et le connecteur 95. Cet organe élastique 98 est apte à exercer une pression axiale sur le connecteur 95. En l'occurrence, l'organe élastique 98 est constitué par au moins un plot venant de matière avec le passe-fil 94 précontraints radialement par rapport à l'axe X' du plot 93 entre le passe-fil et la patte 952 du connecteur 95. Lorsque la soudure 97 est à l'état solide, elle relie le connecteur 95 au plot 93, et permet au connecteur 95 de résister à l'effort axial appliqué par l'organe élastique précontraint 98. En revanche, lorsque la soudure 97 passe alors à l'état fondu, en sorte que le connecteur 95, qui n'est plus retenu par la soudure 97, est écarté du plot 93 du fait de l'effort exercé par l'organe élastique 98.

Comme on peut le voir sur la figure 4, la protection thermique 96 comporte de préférence une butée 101 apte à retenir le connecteur 95 suite à la fonte de la soudure 97. On contrôle ainsi le positionnement final du connecteur 95 après son déplacement causé par l'organe élastique 98. Dans l'exemple de réalisation de la figure 4, la butée 101 présente une forme de portion d'anneau située en regard de la portion 951.

La protection thermique 96 comporte en outre un dispositif de guidage 103 du déplacement du connecteur 95 suite à la fonte de la soudure. Ce dispositif de guidage 103 est formé par deux guides 104 situés de part et d'autre du plot 93 assurant un guidage radial par rapport à l'axe X' du connecteur 95 en direction de la butée 101. Ces guides 104 assurent également un guidage axial par rapport à l'axe X' du plot 93 afin d'éviter que le connecteur 95 tombe vers l'intérieur du porte-balais 42, ce qui pourrait causer des problèmes de court-circuit.

Par ailleurs, les balais 35 de polarité négative destinés au retour de courant sont reliés électriquement à la masse de la machine au moyen de leur tresse 82 respective soudée sur la plaque 76. Les balais 35 de polarité positive et leur cage 43 correspondante sont isolés électriquement de la polarité négative pour un bon fonctionnement du démarreur 11. Cette isolation est obtenue par les couches surmoulées 77.

On décrit ci-après l'activation de la protection thermique 96 en cas de dysfonctionnement du démarreur 11.

Dans le cas d'un court-circuit se produisant dans le moteur électrique du démarreur alors que la batterie du véhicule présente un niveau de charge important, le fusible 116 et/ou les deux tresses 82 de balais formant fusible vont fondre l'une après l'autre. En effet, du fait de leurs résistances différentes (il est en effet impossible de réaliser des tresses 82 ayant des résistances exactement identiques), une des tresses 82 fond avant l'autre en cas de court-circuit. Une des tresses ayant fondu, l'autre va fondre immédiatement après en raison de l'augmentation considérable du courant passant dans le balais 35 auquel est reliée la deuxième tresse.

Dans le cas où le niveau de charge de la batterie du véhicule est important et qu'il se produit un dysfonctionnement qui ne génère pas nécessairement un court-circuit, comme notamment une surchauffe causée par exemple par un fonctionnement à vide du démarreur 11 pendant une longue durée, le seuil de température T1 est atteint. Les couches isolantes 77 surmoulées de la platine 75 se déforment alors, si bien que l'effort exercé par le ressort 44 sur le système de maintien 87 engendre un pivotement des cages 43 de polarité positive qui entrent alors en contact avec la plaque métallique 76 pour établir un court-circuit. Ce court-circuit engendre une augmentation considérable du courant parcourant la machine, ce qui a pour effet de faire fondre les tresses 82 et donc coupe l'alimentation du moteur électrique.

Dans le cas illustré par la figure 7 où le niveau de charge de la batterie du véhicule est faible et qu'il se produit une surchauffe causée par exemple par le fonctionnement à vide du démarreur 11 pendant une longue durée, la température augmente dans le démarreur alors que le courant n'atteint pas le courant seuil (ici 100A) permettant la fonte des tresses des balais positifs formant fusible. Puis lorsque la température atteint la température de fusion de la soudure 97 qui est ici légèrement supérieure à 250 degrés Celsius, le connecteur 95, qui n'est plus retenu par la soudure 97, est écarté du plot 93 du fait de l'effort exercé par l'organe élastique 98. Cela a pour effet de déconnecter électriquement la borne de sortie 32 par rapport aux balais de polarité positive 35. Le démarreur 11 passe alors de l'état de fonctionnement à un état hors service du démarreur 11 dans lequel le moteur 15 n'est plus alimenté du fait de la coupure réalisée dans le chemin électrique 91. On note que lors de son déplacement, le connecteur 95 est guidé par le dispositif de guidage 103 en direction de la butée 101 qui arrête alors son déplacement pour éviter que ce dernier puisse causer des court-circuits.

On dispose ainsi de deux systèmes de protection thermique du démarreur 11 qui pourront agir dans des conditions de fonctionnement différentes du démarreur. En variante, il serait possible de se passer du système de protection thermique basé sur l'utilisation de la plaquette surmoulée générant le court-circuit, seule la protection thermique 96 étant utilisée avec le fusible 116 et/ou les fusibles formés ici par les tresses 82 des balais positifs.

L'homme du métier pourra bien entendu modifier la configuration du porte-balais 42 précédemment décrit sans sortir du cadre de l'invention.

Ainsi, en variante, la protection thermique 96 est située entre deux autres éléments du chemin électrique 91, comme par exemple entre le premier 92 et le deuxième 93 conducteur.

En variante, le chemin électrique 91 est dépourvu de deuxième conducteur 93, le premier conducteur 92 passant à l'intérieur du passe-fil 94 et étant directement relié au connecteur 95.

En variante, l'organe élastique 98 exerce un effort radial sur le connecteur 95 en étant précontraint radialement par rapport à l'axe X par exemple entre le connecteur 95 et la carcasse 21.

En variante, la protection thermique 96 est dépourvue d'organe élastique 98, la séparation des deux éléments 93, 95 suite à la fonte de la soudure 97 étant effectué uniquement par gravité.

Alternativement, la platine 75 est reliée électriquement à la polarité positive. Le ressort à spirales 44 peut également être remplacé par un ressort cylindrique prenant appui sur le capot pour pousser le balai 35 correspondant contre les lames 38 du collecteur 39.

En variante, le porte-balais 42 comporte plus de quatre balais 35, chaque balai 35 pouvant par exemple être associé à un autre balai 35 positionné du côté opposé de la platine 75.

Le porte-balais 42 est ici un porte-balais de machine d'un démarreur de véhicule automobile. En variante, le porte-balais pourrait également appartenir à un alternateur ou à un alterno-démarreur.

## Revendications

1. Démarreur (11) pour moteur thermique de véhicule automobile comprenant :
- au moins un contacteur électromagnétique (25) comprenant une borne de sortie positive (32),
- au moins un moteur électrique (15), ledit moteur électrique (15) comprenant:
- un stator (16) comprenant des bobines (111), chacune des bobines (111) étant bobinée autour d'une pièce polaire pour former un pôle,
- au moins une cage à balai (43),
- au moins un balai positif (35) monté dans ladite cage à balai (43),
- un chemin électrique (91) entre ledit balai positif (35) et la borne de sortie positive (32), et
**caractérisé en ce que** le démarreur comprend également au moins une protection thermique (96) située dans ledit chemin électrique (91), dans lequel ladite protection thermique est apte à déconnecter deux éléments (93, 95) lorsque la protection thermique a une température supérieure à un seuil de température (T2) pour déconnecter électriquement ladite borne de sortie positive (32) par rapport audit balai positif (35) et dans lequel au moins un autre des éléments dudit chemin électrique (91) est un fusible (116, 82) apte à fondre au-delà d'un courant prédéterminé et **en ce que** ladite protection thermique (96) et ledit fusible (82) sont deux éléments distincts.

2. Démarreur selon la revendication 1, dans lequel ledit seuil de température (T2) correspond à une anomalie du démarreur provoquant un échauffement susceptible d'endommager le véhicule.

3. Démarreur selon la revendication 1 ou 2, dans lequel ladite protection thermique (96) est agencée dans ledit moteur électrique (15) de telle façon qu'un facteur principal permettant d'atteindre le seuil de température (T2) en cas d'anomalie est une transmission par conduction thermique et/ou par convection d'une chaleur correspondant à une anomalie de fonctionnement vers ladite protection thermique (96).

4. Démarreur selon l'une quelconque des revendications 1 à 3, dans lequel, en cas de court-circuit, ledit fusible est apte à agir en fondant pour déconnecter électriquement ladite borne de sortie positive (32) par rapport audit balai positif (35).

5. Démarreur selon l'une quelconque des revendications 1 à 4, dans lequel ledit fusible est constitué par une tresse (82) de balai positif (35).

6. Démarreur selon l'une quelconque des revendications 1 à 4, dans lequel ledit fusible (116) est situé dans le chemin électrique (91) entre la protection thermique (96) et un pont de connexion (113) de bobines.

7. Démarreur selon l'une quelconque des revendications 1 à 6, dans lequel ladite protection thermique (96) comprend une soudure (97) à faible température de fusion reliant entre eux un premier et un deuxième éléments (95, 93) dudit chemin électrique (91), ladite soudure (97) étant apte à fondre au-delà dudit seuil de température (T2), dans lequel, dans un état de fonctionnement du démarreur, la soudure (97) est apte à être dans un état solide pour relier le premier élément (95) au deuxième élément (93) et en cas d'anomalie sur le démarreur, ladite soudure (97) est apte à passer à l'état fondu pour permettre à ladite protection thermique (96) de séparer lesdits deux éléments (93, 95) du chemin électrique (91).

8. Démarreur selon la revendication 7, dans lequel ladite protection thermique (96) comporte une butée (101) apte à retenir un des deux éléments dudit chemin électrique (91) suite à la fonte de la soudure.

9. Démarreur selon l'une quelconque des revendications 7 ou 8, dans lequel ladite protection thermique (96) comporte un dispositif de guidage (103) du déplacement d'un des deux éléments dudit chemin électrique (91) suite à la fonte de la soudure.

10. Démarreur selon les revendications 8 et 9, dans lequel ladite protection électrique (96) comprend un organe élastique (98) apte à exercer une pression sur un des éléments (93, 95) dudit chemin électrique (91) reliés entre eux par ladite soudure, en ce que ledit organe élastique (98), ladite butée (101), et ledit dispositif de guidage (103) viennent de matière avec ledit passe-fil (94).

11. Démarreur selon la revendication 8, dans lequel un des éléments dudit chemin électrique (91) est un conducteur (93) et un autre élément dudit chemin électrique (91) est un connecteur (95) reliant électriquement ledit conducteur (93) à au moins une bobine, ces deux éléments étant reliés entre eux par ladite soudure, et dans lequel ledit connecteur (95) présente une forme de crochet.

12. Démarreur selon la revendication 11, dans lequel ledit crochet comporte une portion d'anneau (951) adaptée à entourer en partie le conducteur (93) et une patte (952) pour être relié électriquement auxdites bobines (111).

13. Démarreur selon la revendication 8, dans lequel un des éléments dudit chemin électrique (91) est un conducteur (93) et un autre élément dudit chemin électrique (91) est un connecteur (95) reliant électriquement ledit conducteur (93) à au moins une bobine, ces deux éléments étant reliés entre eux par ladite soudure, et
dans lequel ledit connecteur (95) est relié aux bobines (111) par le biais d'un pont de connexion (113), dit pont de bobine, soudé à au moins une bobine (111).

14. Démarreur selon la revendication 13, **caractérisé en ce que** ledit pont de bobine (113) est monté électriquement entre ledit connecteur (95) et lesdites bobines (111).

## Patentansprüche

1. Anlasser (11) für Kraftfahrzeug-Brennkraftmaschinen, der Folgendes umfasst:
- wenigstens einen elektromagnetischen Kontaktgeber (25), der einen positiven Ausgangsanschluss (32) aufweist, und
- wenigstens einen Elektromotor (15), wobei der Elektromotor (15) Folgendes umfasst:
- einen Stator (16), der Wicklungen (111) aufweist, wobei jede der Wicklungen (111) um ein Polteil gewickelt ist, um einen Pol zu bilden,
- wenigstens einen Kontaktbürstenkäfig (43),
- wenigstens eine positive Kontaktbürste (35), die in dem Kontaktbürstenkäfig (43) montiert ist, und
- einen elektrischen Pfad (91) zwischen der positiven Kontaktbürste (35) und dem positiven Ausgangsanschluss (32)
**dadurch gekennzeichnet, dass** der Anlasser außerdem wenigstens einen Wärmeschutz (96) umfasst, der sich in dem elektrischen Pfad (91) befindet, wobei der Wärmeschutz zwei Elemente (93, 95) entkoppeln kann, wenn der Wärmeschutz eine Temperatur oberhalb einer Temperaturschwelle (T2) hat, um den positiven Ausgangsanschluss (32) von der positiven Kontaktbürste (35) elektrisch zu entkoppeln, und wobei wenigstens ein anderes Element des elektrischen Pfades (91) eine Schmelzsicherung (116, 82) ist, die oberhalb eines vorgegebenen Stroms schmelzen kann, und dass der Wärmeschutz (96) und die Schmelzsicherung (82) zwei verschiedene Elemente sind.

2. Anlasser nach Anspruch 1, wobei die Temperaturschwelle (T2) einer Anomalie des Anlassers entspricht, die eine Erwärmung hervorrufen kann, die das Fahrzeug beschädigen kann.

3. Anlasser nach Anspruch 1 oder 2, wobei der Wärmeschutz (96) in dem Elektromotor (15) in der Weise angeordnet ist, dass ein Hauptfaktor, der ermöglicht, die Temperaturschwelle (T2) im Fall einer Anomalie zu erreichen, die Übertragung von Wärme, die einer Funktionsanomalie entspricht, an den Wärmeschutz (96) durch Wärmeleitung und/oder Konvektion ist.

4. Anlasser nach einem der Ansprüche 1 bis 3, wobei bei einem Kurzschluss die Schmelzsicherung durch Schmelzen bewirken kann, den positiven Ausgangsanschluss (32) von der positiven Kontaktbürste (35) elektrisch zu entkoppeln.

5. Anlasser nach einem der Ansprüche 1 bis 4, wobei die Schmelzsicherung durch eine Litze (82) der positiven Kontaktbürste (35) gebildet ist.

6. Anlasser nach einem der Ansprüche 1 bis 4, wobei sich die Schmelzsicherung (116) in dem elektrischen Pfad (91) zwischen dem Wärmeschutz (96) und einer Verbindungsbrücke (113) der Wicklungen befindet.

7. Anlasser nach einem der Ansprüche 1 bis 6, wobei der Wärmeschutz (96) eine Lötung (97) mit geringer Schmelztemperatur aufweist, die ein erstes und ein zweites Element (95, 93) des elektrischen Pfades (91) miteinander verbindet, wobei die Lötung (97) oberhalb der Temperaturschwelle (T2) schmelzen kann, wobei in einem Betriebszustand des Anlassers die Lötung (97) in einem festen Zustand sein kann, um das erste Element (95) mit dem zweiten Element (93) zu verbinden, und wobei bei einer Anomalie des Anlassers die Lötung (97) in den geschmolzenen Zustand übergehen kann, um dem Wärmeschutz (96) zu ermöglichen, die beiden Elemente (93, 95) des elektrischen Pfades (91) zu trennen.

8. Anlasser nach Anspruch 7, wobei der Wärmeschutz (96) einen Anschlag (101) aufweist, der eines der beiden Elemente des elektrischen Pfades (91) nach dem Schmelzen der Lötung halten kann.

9. Anlasser nach einem der Ansprüche 7 oder 8, wobei der Wärmeschutz (96) eine Vorrichtung (103) für die Führung der Verlagerung eines der beiden Elemente des elektrischen Pfades (91) nach dem Schmelzen der Lötung umfasst.

10. Anlasser nach den Ansprüchen 8 und 9, wobei der elektrische Schutz (96) ein elastisches Organ (98) aufweist, das auf eines der Elemente (93, 95) des elektrischen Pfades (91), die miteinander durch die Lötung verbunden sind, einen Druck ausüben kann, und dass das elastische Organ (98), der Anschlag (101) und die Führungsvorrichtung (103) mit einer Durchgangstülle (94) einteilig ausgebildet sind.

11. Anlasser nach Anspruch 8, wobei eines der Elemente des elektrischen Pfades (91) ein Leiter (93) ist und ein anderes Element des elektrischen Pfades (91) ein Verbinder (95) ist, der den Leiter (93) mit wenigstens einer Wicklung elektrisch verbindet, wobei diese beiden Elemente durch die Lötung miteinander verbunden sind, wobei der Verbinder (95) die Form eines Hakens besitzt.

12. Anlasser nach Anspruch 11, wobei der Haken einen Ringabschnitt (951), der dafür ausgelegt ist, den Leiter (93) teilweise zu umgeben, und eine Lasche (952), um mit den Wicklungen (111) elektrisch verbunden zu werden, umfasst.

13. Anlasser nach Anspruch 8, wobei eines der Elemente des elektrischen Pfades (91) ein Leiter (93) ist und ein anderes Element des elektrischen Pfades (91) ein Verbinder (95) ist, der den Leiter (93) mit wenigstens einer Wicklung elektrisch verbindet, wobei diese beiden Elemente durch die Lötung miteinander verbunden sind, und wobei der Verbinder (95) mit den Wicklungen (111) über die Vorbelastung einer Verbindungsbrücke (113), die Wicklungsbrücke genannt wird und mit wenigstens einer Wicklung (111) verlötet ist, verbunden ist.

14. Anlasser nach Anspruch 13, **dadurch gekennzeichnet, dass** die Wicklungsbrücke (113) zwischen dem Verbinder (95) und den Wicklungen (111) elektrisch montiert ist.

## Claims

1. Starter (11) for a heat engine of a motor vehicle comprising:
- at least one electromagnetic switch (25) comprising a positive output terminal (32),
- at least one electric motor (15), said electric motor (15) comprising:
- a stator (16) comprising coils (111), each of the coils (111) being wound around a pole piece to form a pole,
- at least one brush cage (43),
- at least one positive brush (35) mounted in said brush cage (43),
- an electrical path (91) between said positive brush (35) and the positive output terminal (32), and
**characterized in that** the starter comprises also at least one thermal protection (96) located in said electrical path (91), in which said thermal protection is able to disconnect two elements (93, 95) when the thermal protection has a temperature above a temperature threshold (T2) for electrically disconnecting said positive output terminal (32) with respect to said positive brush (35) and in which at least one other of the elements of said electrical path (91) is a fuse (116, 82) that is able to melt above a predetermined current and **in that** said thermal protection (96) and said fuse (82) are two separate elements.

2. Starter according to claim 1, in which said temperature threshold (T2) corresponds to an abnormal condition of the starter causing heating that could damage the vehicle.

3. Starter according to claim 1 or 2, in which said thermal protection (96) is arranged in said electric motor (15) in such a way that a main factor allowing the temperature threshold (T2) to be reached in case of an abnormal condition is transmission of heat corresponding to an abnormal operating condition to said thermal protection (96), by heat conduction and/or by convection.

4. Starter according to any one of claims 1 to 3, in which, in case of short-circuit, said fuse is able to act by melting and electrically disconnect said positive output terminal (32) with respect to said positive brush (35).

5. Starter according to any one of claims 1 to 4, in which said fuse consists of a braid (82) of a positive brush (35).

6. Starter according to any one of claims 1 to 4, in which said fuse (116) is located in the electrical path (91) between the thermal protection (96) and a coil connecting bridge (113).

7. Starter according to any one of claims 1 to 6, in which said thermal protection (96) comprises a solder (97) with a low melting point joining together a first element and a second element (95, 93) of said electrical path (91), said solder (97) being able to melt above said temperature threshold (T2), in which, in an operating state of the starter, the solder (97) is able to be in a solid state to connect the first element (95) to the second element (93) and in case of an abnormal condition on the starter, said solder (97) is able to pass into the molten state to allow said thermal protection (96) to separate said two elements (93, 95) of the electrical path (91).

8. Starter according to claim 7, in which said thermal protection (96) comprises a stop (101) that is able to retain one of the two elements of said electrical path (91) following fusion of the solder.

9. Starter according to either one of claims 7 or 8, in which said thermal protection (96) comprises a guiding device (103) of the movement of one of the two elements of said electrical path (91) following fusion of the solder.

10. Starter according to claims 8 and 9, in which said electrical protection (96) comprises an elastic element (98) able to exert a pressure on one of the elements (93, 95) of said electrical path (91) joined together by said solder, **characterized in that** said elastic element (98), in which said conductor (93) consists of an elongated stud passing through a grommet (94) mounted on said frame (21). said stop (101), and said guiding device (103) are integral with said grommet (94).

11. Starter according to claim 8, in which one of the elements of said electrical path (91) is a conductor (93) and another element of said electrical path (91) is a connector (95) joining said conductor (93) electrically to at least one coil, these two elements being joined together by said solder, and in which said connector (95) is in the form of a hook.

12. Starter according to claim 11, in which said hook comprises a portion of a ring (951) partly surrounding the conductor (93) and a tab (952) for connecting electrically to said coils (111).

13. Starter according to claim 8, in which one of the elements of said electrical path (91) is a conductor (93) and another element of said electrical path (91) is a connector (95) joining said conductor (93) electrically to at least one coil, these two elements being joined together by said solder, and
in which said connector (95) is connected to the coils (111) via a connecting bridge (113), called coil bridge, soldered to at least one coil (111).

14. Starter according to claim 13, **characterized in that** said coil bridge (113) is mounted electrically between said connector (95) and said coils (111).
